# DEMANDE DE BREVET EUROPEEN

(11) **EP 0 969 270 A2**
(43) Date de publication de la demande: **05.01.2000**
(21) Numéro de dépôt: 99202138.6
(22) Date de dépôt: 01.07.1999
(51) Int. Cl.: G01F 15/18

(54) **Appareil de gaz pour compteur de gaz ou régulateur de gaz**

(30) Priorité: 04.07.1998 DE 19830044
(71) Demandeur: Schlumberger Rombach GmbH, 76185 Karlsruhe (DE)
(72) Inventeur: Schuhbaum, Heinz, 76889 Barbelroth (DE)
(74) Mandataire: Dupont, Henri

(57) **Abrégé**

L'abrégé est relatif à un appareil à gaz avec un boîtier (1) comprenant une enveloppe de boîtier (1b), un raccordement à tuyau unique (2, 3) étant relié avec ledit boîtier ainsi qu'avec un canal d'admission et un canal d'évacuation qui sont disposés concentriquement l'un par rapport à l'autre, le canal central étant formé d'une tubulure (41) disposée dans le boîtier (1) et s'étendant jusque dans le raccordement à tuyau unique (2, 3), caractérisé en ce que l'enveloppe du boîtier (1b) comprend une section entourant la tubulure (41), prolongeant l'enveloppe du boîtier (1b) vers l'extrémité libre de la tubulure (41), ladite section étant étanchéifiée par rapport à l'extrémité libre de la tubulure (41) et étant munie d'ouvertures de passage (43) ouvertes vers le canal concentrique.

## Description

L'invention concerne un appareil à gaz selon le préambule de la revendication 1.

On connaît, par le document OE 387 852, un appareil à gaz constitué par un compteur de gaz dans lequel le boîtier du compteur de gaz est pourvu d'une ouverture dans laquelle est inséré un raccordement à tuyau unique. Le raccordement à tuyau unique forme un canal d'admission et un canal d'évacuation qui sont disposés concentriquement l'un par rapport à l'autre, le canal central étant prolongé par une tubulure disposée dans le boîtier et qui s'étend jusque dans le raccordement à tuyau unique, et étant monté de façon étanche à cet endroit. Un tel raccordement à tuyau unique, qui est constitué par une tubulure du raccordement double pourvue d'un écrou d'accouplement, une des tubulures de raccordement double comprenant d'une part un élément intérieur en fonte et un élément extérieur en acier convenablement usiné dans lequel l'élément intérieur est encastré, est coûteux à construire et à monter.

Le but de l'invention consiste à construire un appareil à gaz selon le préambule de la revendication 1 dont la construction et le montage soient simplifié.

Ce problème est résolu par la partie caractérisante de la revendication 1.

Du fait qu'une enveloppe du boîtier de l'appareil à gaz servant, par exemple, de compteur de gaz ou de régulateur de gaz, comprend une section prolongeante, en particulier de forme tronconique, qui entoure une tubulure centrale disposée dans le boîtier et qui forme un canal d'admission ou d'évacuation, ladite section étant étanchéifiée par rapport à l'extrémité libre de la tubulure et étant munie d'ouvertures de passage ouvertes vers le canal d'admission ou d'évacuation concentrique, on obtient une construction simplifiée et facile à monter, qui ne comporte qu'un petit nombre de pièces détachées.

D'autres formes de réalisation de l'invention se trouvent dans la description qui va suivre et dans les revendications secondaires.

L'invention est exposée de façon plus détaillée ci-après à l'aide d'exemples de réalisation représentés par les dessins annexés.

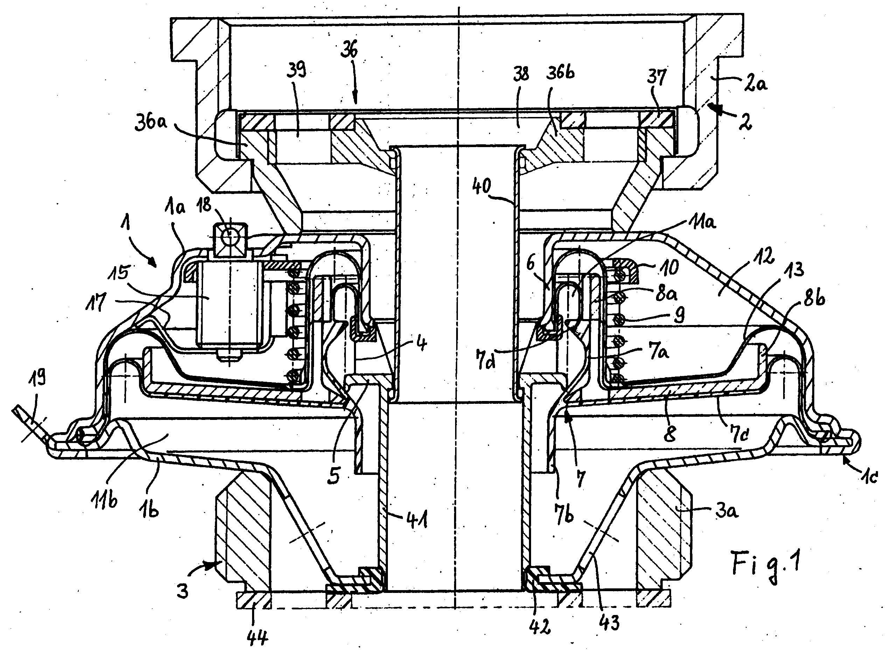

Les figures 1 à 4 montrent - par des coupes partielles - différentes formes de réalisation d'un appareil à gaz en coupe axiale.

L'appareil à gaz représenté sur la figure 1, réalisé sous la forme d'un régulateur de pression de gaz à conduit unique possède un boîtier 1 sensiblement circulaire en vue de dessus, qui présente deux enveloppes de boîtier concentriques 1a, 1b en tôle, assemblées entre elles le long du bord périphérique, par exemple par un joint serti 1c, et des raccordements à tuyau unique 2, 3 assemblés respectivement à l'une et à l'autre des enveloppes 1a, 1b du boîtier, disposés axialement l'un à la suite de l'autre, et destinés à être engagés respectivement dans une conduite de gaz et dans un compteur de gaz. Toutefois, l'enveloppe 1a du boîtier peut aussi être réalisée dans une autre matière et reliée d'une autre façon à l'enveloppe 1b du boîtier.

Un siège de soupape 5 d'un dispositif de soupape à diaphragme se trouvant dans le boîtier 1 en forme de disque, muni d'ouvertures latérales de passage du courant 4 est assemblé avec l'enveloppe 1a du boîtier, par l'intermédiaire d'une tubulure 6 formée au niveau de l'enveloppe 1a du boîtier, et qui est disposée axialement en position centrale dans cet exemple de réalisation.

Le dispositif de soupape à diaphragme comprend en outre un diaphragme 7 d'un seul tenant qui présente une ouverture de passage en forme de buse, disposée en position centrale, qui s'étend autour du siège de soupape 5 et qui est limitée, sur le côté dirigé vers le tuyau d'admission 2, par une section d'anneau 7a qui entoure le siège de soupape 5 et qui s'étend sensiblement axialement, tandis que, sur le côté dirigé vers le tuyau d'évacuation 3, elle débouche, avec rétrécissement en entonnoir de Venturi dans un tuyau 7b qui est engagé dans le tuyau d'évacuation 3 tout en laissant un jeu. Le diaphragme 7 comprend en outre une section d'anneau 7c s'étendant sensiblement radialement, qui s'étend de la région de l'ouverture de passage jusqu'au sertissage 1c où elle est renflée et serrée de façon étanche.

Les deux sections d'anneaux 7a, 7c du diaphragme 7 sont de forme ondulée dans la région adjacente à leur bord extérieur recouvert, pour permettre un déplacement axial en dépit de l'encastrement de leurs périphéries extérieures. Entre les deux sections d'anneaux 7a, 7c du diaphragme 7, est disposé un disque de diaphragme annulaire 8, de préférence encastrée dans une contre-dépouille formée entre les sections d'anneaux 7a, 7c et qui comprend, sur chacune de ses périphéries, intérieure et extérieure, une section d'anneau d'appui 8a, 8b qui s'étend dans la direction axiale vers le côté d'admission, ces sections donnant un appui approprié aux sections d'anneaux 7a, 7c.

Un ressort 9, constitué par exemple par un ressort hélicoïdal, qui prend appui contre une coupelle de ressort 10 disposée dans le boîtier 1, précontraint le diaphragme 7 en direction du tuyau d'évacuation 3. En l'absence de pression de sortie, le dispositif de soupape à diaphragme se trouve en position de fermeture, dans laquelle un anneau de soupape 7d, formé sur le côté intérieur de la section d'anneau 7a, et qui s'étend obliquement par rapport au siège de soupape 5, vient en prise avec le côté du siège de soupape 5 qui est dirigé vers le tuyau d'admission 2. Ce siège est muni d'un petit perçage (non représenté) pour permettre un remplissage progressif de la conduite de gaz du côté de la sortie lorsque la pression du gaz est à nouveau appliquée du côté de l'entrée.

La section d'anneau 7a forme une chambre de compensation 11a avec l'anneau de soupape 7d, tandis que la section d'anneau 7c forme avec l'enveloppe en tôle 1b, une chambre de pression différentielle 11b qui est soumise à la pression du gaz qui sort en passant par le jeu formé entre le tuyau 7b et le tuyau d'évacuation 3.

Lorsque du gaz est capté du côté de la sortie, le dispositif de soupape à diaphragme s'ouvre, de sorte que le gaz entrant par le tuyau d'admission 2 s'écoule à travers les ouvertures de passage 4, puis entre le siège de soupape 5 et le diaphragme de travail 7, pour pénétrer dans le tuyau 7b et de là, s'évacuer en passant par le tuyau de sortie 3. Lorsque la pression du gaz est trop élevée, le diaphragme 7 se ferme par le fait qu'il entre en prise avec le siège de soupape 5 du côté de la sortie.

La pression d'air extérieure sert ici de pression de référence. Cette pression règne dans une chambre 12 formée entre l'enveloppe en tôle 1a et le diaphragme 7 et qui est en communication avec l'espace extérieur, c'est-à-dire avec l'atmosphère.

Le diaphragme 7 est ainsi un diaphragme à fonctions multiples qui est en même temps un diaphragme de travail et un diaphragme de compensation. Il forme l'ouverture de passage centrale du dispositif de soupape à diaphragme et ferme de façon étanche en cas de manque de pression. Par ailleurs, il forme un convergent de Venturi ainsi que le joint étanche du boîtier. Entre le joint extérieur du boîtier et le joint de l'ouverture de passage, il n'y a pas d'ouvertures qui devraient être fermées de façon étanche. Etant donné que le disque de diaphragme 8 est avantageusement retenu dans une contre-dépouille du diaphragme 7, il ne se pose pas de problèmes d'étanchéité intérieure. La diaphragme 7 en une seule pièce permet une construction très compact avec des longueurs de construction de l'ordre de 50 mm.

Entre le diaphragme 7 ou le disque de diaphragme 8 et l'enveloppe en tôle 1a, il est en outre avantageusement prévu un diaphragme de sécurité 13 sur lequel le ressort 9 prend appui dans une région renforcée et dont les bord renflés sont serrés de façon étanche, avec les bords extérieurs des sections d'anneaux 7a, 7c du diaphragme 7.

La coupelle de ressort 10 est avantageusement réglable dans la direction axiale pour le réglage de la précontrainte du ressort 9, au moyen d'une vis de réglage 15 disposée dans une position décentrée qui émerge en dehors du boîtier 1 et qu'on peut faire tourner par rapport à la coupelle de ressort 10 au moyen d'un perçage fileté correspondant, la vis de réglage 15 étant tenue dans le boîtier 1 par un étrier de retenue élastique 17. La position de la vis de réglage 15 peut être immobilisée au moyen d'un fil de plomb qui est passé à travers une ouverture 18 de la vis de réglage 15 et à travers un oeillet 19 prévu sur le boîtier. L'ouverture du boîtier qui reçoit la vis de réglage 15 est avantageusement utilisée comme communication de la chambre 12 avec l'atmosphère.

Ici, il peut être prévu entre la vis de réglage 15 et le boîtier 1 une rondelle intermédiaire (non représentée) qui fond en cas d'incendie, de sorte que, par l'intermédiaire de la coupelle de ressort 10, le ressort hélicoïdal 9 pousse la vis de réglage 15 dans l'ouverture du boîtier pour fermer cette dernière. L'étrier 17 de retenue du ressort exerce ici une action d'assistance. Ceci forme d'une façon simple une sécurité contre le feu.

Le raccordement à tuyau unique 2 côté entrée comprend un distributeur 36 assemblé au boîtier 1, par exemple par soudage, qui est composé d'un anneau extérieur 36a et d'un anneau intérieur 36b, un joint 37 étant disposé sur ce dernier. L'anneau intérieur 36b présente une ouverture d'évacuation centrale 38 et plusieurs ouvertures d'admission 39, séparées les unes des autres par des nervures, disposées en couronne autour de l'ouverture d'évacuation 38, tandis que l'anneau extérieur porte un écrou d'accouplement 2a.

Dans l'ouverture d'évacuation 38, est emmanché de façon étanche un tronçon de tube 40 qui s'étend de l'anneau intérieur 36b jusqu'au siège de soupape 5 et est de même emmanché de façon étanche dans une ouverture de ce siège. Le siège de soupape 5 est muni d'une tubulure 41 qui prolonge le tronçon de tube 40 jusqu'à la tubulure de raccordement 3 et qui forme la conduite d'évacuation avec le tronçon de tube 40 et, en même temps, renforce l'effet de Venturi de la tubulure 7b en forme d'entonnoir de la membrane 7.

L'enveloppe 1b du boîtier se prolonge, au moyen d'une section de forme tronconique, jusqu'à l'extrémité de la tubulure 41 qui est éloignée du siège de soupape 5 et est étanchéifiée par rapport à ce dernier au moyen d'un joint 42, constitué en particulier par un joint emboîté en forme de U. Par ailleurs, l'enveloppe 1b du boîtier possède, dans sa section tronconique, des ouvertures de passage 43 pour le gaz qui traverse le dispositif de soupape à diaphragme et longe la périphérie extérieure du tronçon de tube 40, de sorte que dans l'espace annulaire formé entre l'enveloppe 1b du boîtier et l'anneau fileté 3a du raccordement à tuyau unique 3 qui est relié à cette enveloppe, par exemple par soudage, et s'écoule de là dans un compteur de gaz vissé à l'anneau fileté 3a avec interposition d'un joint 44, d'où le gaz s'écoule de nouveau en passant par la tubulure 41 et le tronçon de tube 40. Eventuellement, les joints 42 et 44 peuvent aussi être réalisés ensemble d'un seul tenant. Le tube 40 peut aussi être réalisé d'un seul tenant avec l'anneau intérieur 36b.

Comme représenté dans cette forme de réalisation, la section d'anneau d'appui 8a du disque 8 de la membrane peut présenter des fentes et nervures axiales, et il peut aussi être prévu un appui axial de la section d'anneau 7a par des nervures correspondantes.

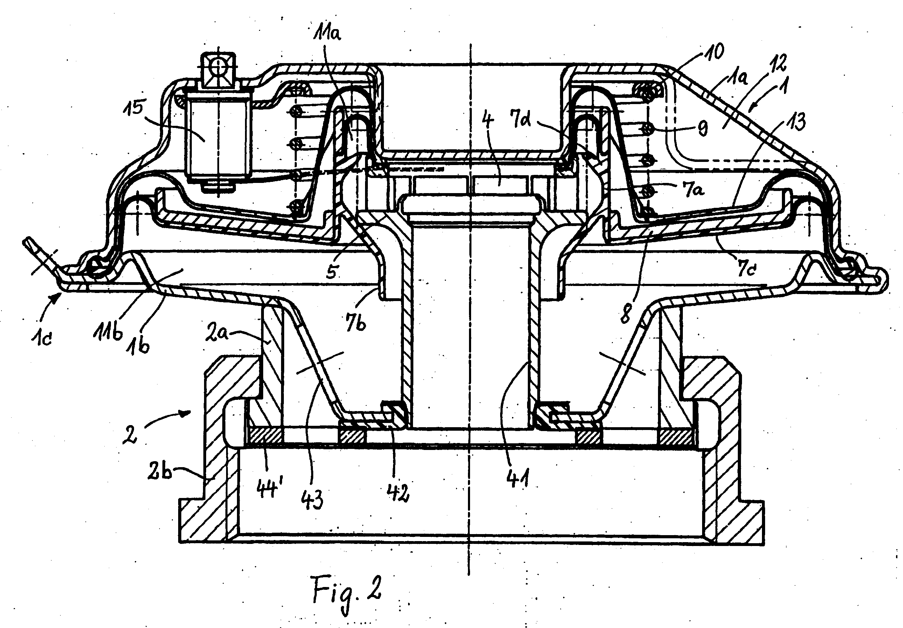

Quant à la forme de réalisation représentée sur la figure 2, il s'agit également d'un régulateur à un conduit dans lequel le côté de l'entrée et le côté de la sortie coïncident, le gaz étant admis au centre et évacué coaxialement. Ici, le siège de soupape 5 est fixé à l'enveloppe en tôle 1a et comprend un tuyau 5a côté admission auquel se raccordent une partie de siège annulaire 5b munie d'ouvertures de passages 4 et une section disque 5c qui sert à fixer l'enveloppe en tôle 1a et à serrer les bords périphériques correspondants de la section d'anneau 7a du diaphragme 7 et le diaphragme de sécurité 13.

Ici, la section tronconique de l'enveloppe 1b du boîtier, qui porte les ouvertures de passages 43, est entourée d'une douille de raccordement 2a fixée à cette enveloppe, qui forme l'espace annulaire côté sortie en combinaison avec l'enveloppe 1b du boîtier. La douille de raccordement 2a porte un écrou d'accouplement 2b et une bague d'étanchéité 44' encastrée.

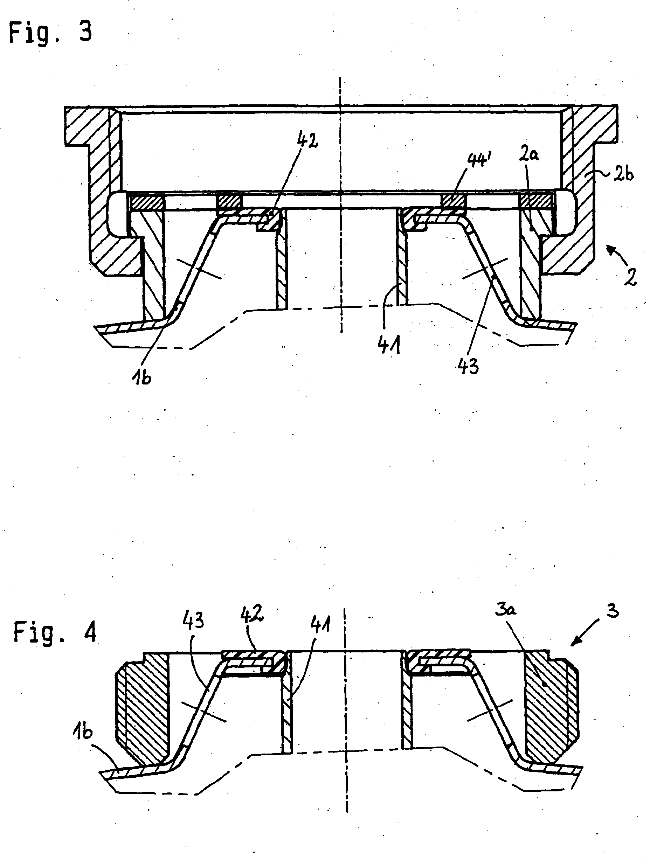

Dans la forme de réalisation représentée sur la figure 3, l'enveloppe 1b du boîtier 1 d'un compteur de gaz est pourvue de la section tronconique présentant les ouvertures de passage 43 et qui est réunie à l'extrémité libre de la tubulure 41 par l'intermédiaire du joint 42 et qui est disposée côté entrée ou côté sortie. La section tronconique de l'enveloppe 1b du boîtier est entourée de la douille de raccordement 2a qui y est fixée et qui forme l'espace annulaire côté sortie ou côté entrée respectivement avec l'enveloppe 1b du boîtier. La douille de raccordement 2a porte ici également un écrou d'accouplement 2b et une bague d'étanchéité 44' encastrée.

Dans la forme de réalisation représentée sur la figure 4, la douille de raccordement 2a et l'écrou d'accouplement 2b sont remplacés par une bague filetée 3a.

La section tronconique de l'enveloppe 1b du boîtier qui est présentée dans les formes de réalisation des figures 1 à 4 peut aussi présenter n'importe quelle autre forme qui prolonge l'enveloppe 1b du boîtier jusqu'à l'extrémité libre de la tubulure 41, par exemple, elle peut être d'une configuration cylindrique ou bombée vers l'intérieur ou vers l'extérieur.

## Revendications

1. Appareil à gaz avec un boîtier (1) comprenant une enveloppe de boîtier (1b), un raccordement à tuyau unique (2, 3) étant relié audit boîtier ainsi qu'avec un canal d'admission et un canal d'évacuation qui sont disposés concentriquement l'un par rapport a l'autre, le canal central étant formé d'une tubulure (41) disposée dans le boîtier (1) et s'étendant jusque dans le raccordement à tuyau unique (2, 3), caractérisé en ce que l'enveloppe du boîtier (1b) comprend une section entourant la tubulure (41), prolongeant l'enveloppe du boîtier (1b) vers l'extrémité libre de la tubulure (41), ladite section étant étanchéifiée par rapport à l'extrémité libre de la tubulure (41) et étant munie d'ouvertures de passage (43) ouvertes vers le canal concentrique.

2. Appareil à gaz selon la revendication 1, caractérisé en ce que le joint (42) est formé en tant que joint d'étanchéité lié.

3. Appareil à gaz selon la revendication 1 ou 2, caractérisé en ce que la section prolongeante de l'enveloppe du boîtier (1b) est entourée par une bague filetée (3a) extérieure.

4. Appareil à gaz selon la revendication 1 ou 2, caractérisé en ce que la section prolongeante de l'enveloppe du boîtier (1b) est entourée par un manchon de raccordement extérieur qui porte un écrou d'accouplement (2b).

5. Appareil à gaz selon l'une des revendications 1 à 4, caractérisé en ce que la section prolongeante de l'enveloppe du boîtier (1b) est pour l'essentiel en forme de cône tronqué.

6. Appareil à gaz selon l'une des revendications 1 à 5, caractérisé en ce que pour la régulation de la pression de gaz dans le boîtier (1), entre le canal d'admission et d'évacuation, est prévu un dispositif de soupape à diaphragme pour la fermeture d'une ouverture de passage semblable à une buse, le dispositif de soupape à diaphragme comprenant un siège de soupape (5) et un diaphragme de travail (7a) travaillant ici ensemble avec ledit siège, ledit diaphragme étant précontraint élastiquement et soumis d'un côté à une pression de référence et du côté de la chambre de l'évacuation à un milieu de type gazeux, ainsi qu'un diaphragme de compensation (7c) limitant une chambre de compensation (11a).

7. Appareil à gaz selon la revendication 6, caractérisé en ce que le diaphragme de compensation, en tant que section d'anneau (7a) s'étendant pour l'essentiel dans la direction du courant, forme avec le diaphragme de travail présentant une ouverture de passage, en tant que section d'anneau (7c) s'étendant pour l'essentiel perpendiculairement par rapport à la direction du courant, un diaphragme (7) d'un seul tenant.

8. Appareil à gaz selon la revendication 7, caractérisé en ce que le diaphragme (7) du côté de l'évacuation présente un tuyau (7b) de type entonnoir qui produit, selon le principe de Venturi, la pression du côté de l'évacuation sous le diaphragme de travail.

9. Appareil à gaz selon la revendication 8, caractérisé en ce que le tuyau (7b) est formé d'un seul tenant avec le diaphragme (7).

10. Appareil à gaz selon la revendication 8, caractérisé en ce que le tuyau (7b) est formé de façon séparée du diaphragme (7) et est conduit à l'opposé du siège de soupape (5).

11. Appareil à gaz selon l'une des revendications 6 à 10, caractérisé en ce que le diaphragme (7) est renforcé par un disque de diaphragme (8) qui est, en particulier, posé de façon libre.

12. Appareil à gaz selon la revendication 11, caractérisé en ce que le disque de diaphragme (8) est mis en oeuvre dans une contre-dépouille entre les sections d'anneau (7a,7c) du diaphragme 7.

13. Appareil à gaz selon l'une des revendications 6 à 12, caractérisé en ce que la périphérie du diaphragme (7) présente des bords formés en tant qu'anneaux d'étanchéité.

14. Appareil à gaz selon l'une des revendications 6 à 13, caractérisé en ce que le diaphragme (7) présente au niveau de la face intérieure de la section d'anneau (7a), un anneau de soupape (7d) formé d'un seul tenant avec ladite section d'anneau (7a), ledit anneau de soupape (7d) entrant en prise avec le siège de soupape (5) lors d'une pression de gaz insuffisante.

15. Appareil à gaz selon l'une des revendications 6 à 14, caractérisé en ce que le siège de soupape (5) présente une section d'anneau périphérique pourvue d'ouvertures de passage du courant (4).

16. Appareil à gaz selon l'une des revendications 6 à 15, caractérisé en ce que le diaphragme de sécurité (13) est disposé entre le boîtier (1) et le côté du diaphragme (7) soumis à la pression de référence.

17. Appareil à gaz selon l'une des revendications 6 à 16, caractérisé en ce que le diaphragme (7) est soumis à un ressort (9) réglable maintenu par le boîtier (1).

18. Appareil à gaz selon la revendication 17, caractérisé en ce que le ressort (9) est maintenu dans le boîtier (1) grâce à une coupelle de ressort (10) qui est disposée de façon à pouvoir être réglée par rapport au diaphragme (7).

19. Appareil à gaz selon la revendication 18, caractérisé en ce que la coupelle de ressort (10) est réglable par l'intermédiaire d'une vis de réglage (15) actionnable au travers d'une ouverture dans le boîtier.

20. Appareil à gaz selon la revendication 19, caractérisé en ce qu'une rondelle intermédiaire pouvant fondre pour des températures élevées est disposé entre la vis de réglage (15) et le boîtier (1), de telle sorte qu'en cas de fonte du disque intermédiaire (20), l'ouverture dans le boîtier soit fermée par l'intermédiaire de la vis de réglage (15).

21. Appareil à gaz selon l'une des revendications 6 à 20, caractérisé en ce que le boîtier (1) est formé de deux enveloppes de boîtier (1a, 1b), entre lesquelles le diaphragme (7) est encastré de façon étanche au niveau de la périphérie extérieure du boîtier (1).
